# FASCICULE DE BREVET EUROPEEN

(11) **EP 1 327 489 B1**
(45) Date de publication et mention de la délivrance du brevet: **26.10.2011**
(21) Numéro de dépôt: 03290048.2
(22) Date de dépôt: 09.01.2003
(51) Int. Cl.: B21D 26/02, B21D 47/00

(54) **Procédé de fabrication d'une structure ayant des rainures**
Verfahren zum Herstellen einer Rillenstruktur
Method for making a grooved structure

(30) Priorité: 11.01.2002 BE 200200014
(43) Date de publication de la demande: 16.07.2003
(73) Titulaire: Sonaca S.A., 6041 Gosselies (BE)
(72) Inventeur: Debaisieux, Stéphane, 7181 Feluy (BE); Overbergh, Christian, 1342 Limelette (BE); Quets, Sébastien, 1460 Ittre (BE)
(74) Mandataire: Poulin, Gérard

(56) Documents cités:
- EP-A- 0 527 575
- EP-A- 0 893 342
- EP-A2- 0 206 416
- US-A- 2 859 509
- US-A- 2 999 307
- US-A- 5 115 963
- US-A- 5 330 092
- US-A- 5 797 239
- US-A- 5 941 446
- US-A- 5 975 465

## Description

L'invention concerne principalement un procédé de fabrication d'une structure métallique de forme généralement aérodynamique, dans laquelle sont formées des canalisations ou des cannelures juxtaposées conformément au préambule de la revendication 1. Plus précisément, le procédé de fabrication selon l'invention met en oeuvre la technique du soudage par diffusion et du formage superplastique, communément appelée "SPFDB" (de l'anglais "SuperPlastic Forming and Diffusion Bonding").

L'invention trouve une application privilégiée dans l'industrie aéronautique. En particulier, le procédé selon l'invention permet notamment de réaliser une sous structure de volet de bord d'attaque, fixe ou mobile, munie de cannelures intérieures. Ces cannelures peuvent notamment être destinées au contrôle de l'écoulement de l'air ou au dégivrage des surfaces extérieures.

L'invention peut toutefois être utilisée dans d'autres domaines techniques, pour réaliser tous types de canalisations intégrées à une structure ou de panneaux rigidifiés par les cloisons qui séparent les cannelures.

### Etat de la technique

Pour assurer la sécurité et améliorer les performances des aéronefs, on équipe généralement le bord d'attaque des ailes, des empennages et des dérives, ainsi que les entrées d'air des réacteurs, de dispositifs évitant l'apparition de givre ou assurant le contrôle de l'écoulement de l'air sur les surfaces aérodynamiques de ces différents éléments.

Le document US-A-3 933 327 montre un dispositif de dégivrage d'une nacelle de réacteur, dans lequel le bord d'attaque comprend deux parois conduisant l'air chaud vers des passages radiaux qui débouchent sur une structure sandwich en nid d'abeilles. Cette structure est munie de perforations pour acheminer l'air chaud vers la paroi extérieure de la nacelle, afin de prévenir la formation de glace. Elle assure par ailleurs une atténuation acoustique du bruit émis par l'écoulement. Les deux parois et les passages d'air chaud sont réalisés par application des procédés de fabrication classiques utilisés en aéronautique.

Le document WO-A-98/47761 montre le bord d'attaque d'une aile d'avion, formé de deux parois parallèles reliées l'une à l'autre par des raidisseurs, afin de définir une structure cloisonnée apte à résister aux efforts aérodynamiques. Les espaces délimités entre les parois et les raidisseurs constituent des zones de communication pour l'air qui est aspiré par des perforations traversant la paroi extérieure. L'aspiration de l'air à l'intérieur du bord d'attaque permet de réduire la turbulence sur le contour du bord d'attaque. Cela a pour effet de diminuer la traînée de l'aile et, par conséquent, d'améliorer les performances de l'aéronef. La fabrication de ce type de structure fait appel à un certain nombre d'outillages spécifiques et notamment à des gabarits pour positionner et assembler les raidisseurs aux deux parois, ce qui est particulièrement pénalisant pour réduire les coûts et les temps de fabrication.

Le document US-A-6 050 523 décrit une structure de bord d'attaque qui comprend une sous structure en matériau composite et une paroi en titane collée à cette sous structure. Dans le sens de l'envergure, la sous structure comprend des canalisations de section circulaire, en face desquelles se trouvent des perforations réalisées dans la paroi. La réalisation d'une telle structure est très complexe car elle nécessite la mise en oeuvre de techniques différentes pour former la paroi au profil désiré et pour l'obtention de la sous structure en matériau composite. La combinaison de ces deux techniques de fabrication et l'assemblage de la paroi sur la sous structure conduisent à des opérations longues et complexes.

Le document EP-A-0 376 371 a trait à une structure conçue pour éviter le givrage de surfaces aérodynamiques d'un aéronef, telles que les voilures et les volets, grâce à l'intervention d'un fluide chaud circulant dans des canalisations orientées selon la corde d'un profil et de proche en proche, sur toute l'envergure de l'aile. Le procédé de fabrication utilisé pour réaliser conjointement le bord d'attaque de l'aile et les canalisations de dégivrage met en oeuvre un jeu de moules qui reproduit la forme extérieure du bord d'attaque et la forme des canalisations. Selon ce procédé, les tôles sont préparées, puis assemblées partiellement par une opération métallurgique. Elles sont ensuite préformées et placées entre un moule mâle qui définit le contour extérieur de la structure et un moule femelle qui définit la forme des canalisations. Une source de chaleur permet alors aux tôles de se déformer plastiquement sous l'action d'un gaz pour venir épouser le moule femelle.

Le document US-A-2 690 002 concerne un procédé de fabrication d'une structure mince pour échangeur de chaleur. La structure est réalisée en plaçant l'une sur l'autre deux tôles. Aux emplacements prévus pour la formation des canalisations, on sépare ces deux tôles au moyen d'un matériau apte à éviter leur assemblage lors d'une opération ultérieure de laminage à chaud. Lorsque ladite opération a été effectuée et que les tôles sont assemblées, un fluide sous pression est injecté entre les tôles pour former les canalisations symétriquement de part et d'autre des tôles. Si l'on désire que les canalisations n'apparaissent que sur l'une des faces de la structure, on donne à la tôle opposée à cette face une épaisseur plus grande qui lui assure une rigidité empêchant sa déformation. Cette technique, qui repose sur une expansion libre des tôles, n'utilise pas de moule pour former les différentes parties de la structure, sauf si l'on désire donner aux canalisations une section droite particulière, par exemple en forme de triangle.

Les procédés de fabrication décrits dans les documents EP-A-0 376 371 et US-A-2 690 002 utilisent l'un et l'autre un cycle de pression pour réaliser la structure, ce qui nécessite soit l'emploi de formes et de contre formes, soit une structure symétrique pour équilibrer les efforts pendant la formation des canalisations.

Le document US 5 975 465 A décrit une structure métallique dont le procédé de fabrication est conforme au préambule de la revendication 1.

Le document US 5 330 092 A décrit la fabrication d'une structure sandwich telle qu'une aile à partir d'un empilement de tôles entouré d'une peau. Cet empilement est placé dans un moule et la peau est plaquée contre celui-ci par l'application d'une différence de pressions. Le même procédé, appliqué ensuite à l'empilement de tôles, permet de donner à celles-ci les formes désirées.

Dans le document EP 0 893 342 A, un bord d'attaque d'aile d'aéronef est fabriqué en plaçant des tôles perforées dans un moule de forme complémentaire, puis en appliquant une pression à l'intérieur de l'empilement.

### Exposé de l'invention.

L'invention concerne un procédé de fabrication d'une structure cannelée, dont la conception originale lui permet de résoudre au moins en partie les problèmes posés pour réaliser de telles structures par les procédés de l'art antérieur.

De façon plus précise, l'invention a pour objet un procédé qui permet de fabriquer une structure cannelée de façon particulièrement simple et peu coûteuse, sans faire appel à des outillages ou des procédures complexes.

Conformément à l'invention, cet objectif est atteint grâce à un procédé de fabrication conforme à la revendication 1.

Le procédé selon l'invention repose sur l'indépendance des pressions appliquées d'une part dans les premières régions R1, qui correspondent à une cellule sur deux de la structure fabriquée, et d'autre part dans les deuxièmes régions R2 (les autres cellules) et sur la face de l'empilement qui correspond à la paroi intérieure de la structure fabriquée. Lors de la première phase du cycle de pression, on forme partiellement les cellules par un gonflement des premières régions. Lors de la deuxième phase du cycle de pression, on assure la mise en forme finale des cellules et de la paroi extérieure afin de lui donner le caractère lisse souhaité. A cet effet, on applique progressivement l'empilement contre le moule tout en maintenant sous pression l'ensemble des cellules.

Dans un mode de réalisation préféré de l'invention, la première pression appliquée dans les premières régions R1 augmente progressivement jusqu'à une valeur prédéterminée, pendant environ une première moitié de la durée de la première phase du cycle de pression, puis reste constante jusqu'à la fin de ladite première phase, où la première pression redescend très rapidement à une valeur égale à celle de la deuxième pression appliquée dans les deuxièmes régions R2 et sur ladite face de la troisième tôle T2.

Avantageusement, la valeur prédéterminée de la première pression appliquée dans les premières régions R1, lors de la première phase du cycle de pression, est sensiblement égale à quatre fois la deuxième pression alors appliquée dans les deuxièmes régions R2 et sur ladite face de la troisième tôle T2.

Selon un autre aspect de ce mode de réalisation préféré, la durée totale de la première phase du cycle de pression est d'environ 60 minutes.

Selon encore un autre aspect de ce mode de réalisation préféré, la deuxième pression appliquée dans les deuxièmes régions R2 et sur ladite face de la troisième tôle T2 reste sensiblement constante et égale à environ un bar pendant la première phase du cycle de pression.

Selon encore un autre aspect du mode de réalisation préféré de l'invention, les pressions dans les premières et deuxièmes régions R1, R2 et sur ladite face de la troisième tôle T2 augmentent régulièrement pendant la deuxième phase du cycle de pression, jusqu'à l'obtention d'une pression finale déterminée, de préférence égale à environ 9 bars.

Avantageusement, la deuxième phase du cycle de pression a une durée sensiblement égale à celle de la première phase du cycle de pression.

Selon un mode de réalisation particulier de l'invention, on met en place simultanément dans le moule deux empilements de tôles et on sépare lesdits empilements lors d'une phase préliminaire du cycle de pression, pendant lequel une pression identique, de faible niveau, est appliquée durant une très courte période de temps à la fois dans les premières et deuxièmes régions R1, R2 et sur ladite face de la troisième tôle T2, la phase préliminaire du cycle de pression précédant la première phase du cycle de pression.

Dans ce mode de réalisation particulier, la phase préliminaire du cycle de pression dure avantageusement environ une minute et le niveau de la pression appliquée durant cette phase préliminaire est d'environ 1 bar.

De façon concrète, on applique avantageusement la première pression par au moins un canal de distribution dans lequel débouchent les premières régions R1.

Avantageusement, la face de la première tôle T1 tournée vers la tôle intermédiaire T3 est partiellement usinée suivant des bandes prévues pour être soudées à cette dernière, sur une épaisseur égale à celle de la tôle intermédiaire, avant la mise en place de l'empilement dans le moule. Ainsi, la paroi extérieure de la structure fabriquée présente une épaisseur sensiblement constante et une surface extérieure parfaitement lisse.

Selon un autre aspect de l'invention, on donne aux cellules une largeur sensiblement égale à 5 fois la hauteur desdites cellules.

### Brève description des dessins

On décrira à présent, à titre d'exemple illustratif et nullement limitatif, un mode de réalisation préféré de l'invention, en se référant aux dessins annexés, dans lesquels :
- la figure 1 est une vue en perspective qui représente schématiquement un bord d'attaque mobile d'une voilure d'aéronef, intégrant une sous structure fabriquée par le procédé selon l'invention ;
- la figure 2 est une section de la sous structure fabriquée par le procédé selon l'invention ;
- la figure 3 est une vue en coupe représentant schématiquement un moule permettant de fabriquer la sous structure de la figure 2, à partir d'un empilement de trois tôles ;
- la figure 4 est une vue en coupe à plus grande échelle montrant l'empilement de tôles placé dans le moule de la figure 3 ainsi que les zones d'application de l'anti-diffuseur ;
- la figure 5 est une vue en perspective représentant une extrémité de l'empilement de tôles comportant notamment un canal d'alimentation en pression des premières régions, permettant la formation des cellules ;
- la figure 6 est un graphique qui représente l'évolution séparée de la pression P1 dans les premières régions R1 et de la pression P2 dans les deuxièmes régions R2 et sur la face interne de l'empilement de tôles (en HPa), en fonction du temps t (en secondes), lors de la mise en oeuvre du procédé selon l'invention ;
- la figure 7 représente la forme de la structure à la fin de l'étape de conformation finale du revêtement extérieur ;
- la figure 8 est une vue en coupe schématique qui illustre une phase préliminaire du procédé, lors de la fabrication simultanée de deux sous ensembles dans un même moule ;
- les figures 9 et 10 sont des vues comparables à la figure 8, qui illustrent deux étapes successives de la première phase du procédé ; et
- la figure 11 est une vue comparable aux figures 8 à 10, qui illustre la deuxième phase du procédé selon l'invention.

### Description détaillée d'un mode de réalisation préféré de l'invention

Le mode de réalisation préféré du procédé selon l'invention qui va à présent être décrit en détail concerne la fabrication d'une sous structure de bord d'attaque d'une voilure d'aéronef. On comprendra cependant que cette sous structure ne constitue qu'un exemple nullement limitatif des différentes pièces susceptibles d'être obtenues par le procédé selon l'invention.

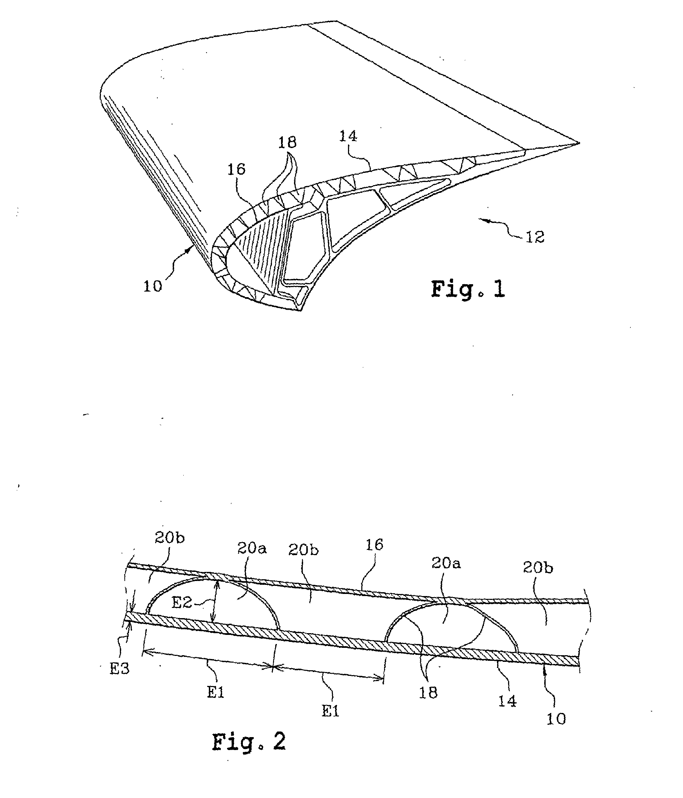

La sous structure dont la fabrication va être décrite est représentée en 10 sur la figure 1, dans le cas où elle fait partie d'un bord d'attaque mobile 12 d'une voilure d'aéronef. Une sous structure de géométrie comparable se trouve également dans les bords d'attaque fixes des voilures d'aéronef.

La sous structure 10 est composée de parois minces en titane et forme un panneau courbe. Elle comprend essentiellement une paroi extérieure 14, lisse et aérodynamique, une paroi intérieure 16 et des cloisons 18 reliant les parois 14 et 16 en délimitant entre elles des cellules ou cannelures adjacentes 20a et 20b, comme l'illustre plus précisément la figure 2. Les cloisons 18 ainsi que les cellules 20a et 20b sont orientées selon l'envergure de la voilure.

Comme on le décrira plus en détail par la suite, les parois 14 et 16 ainsi que les cloisons 18 du panneau formant la sous structure 10 sont obtenues en assemblant trois tôles de titane initialement planes. Plus précisément, cet assemblage est réalisé par la technique du soudage par diffusion et du formage superplastique.

La figure 2 montre notamment les dimensions caractéristiques des cellules 20a et 20b de la sous structure 10 que l'on désire fabriquer. Ces dimensions sont la largeur E1 des cellules, du côté de la paroi extérieure 14, la profondeur E2 des cellules et l'épaisseur E3 de la paroi extérieure 14.

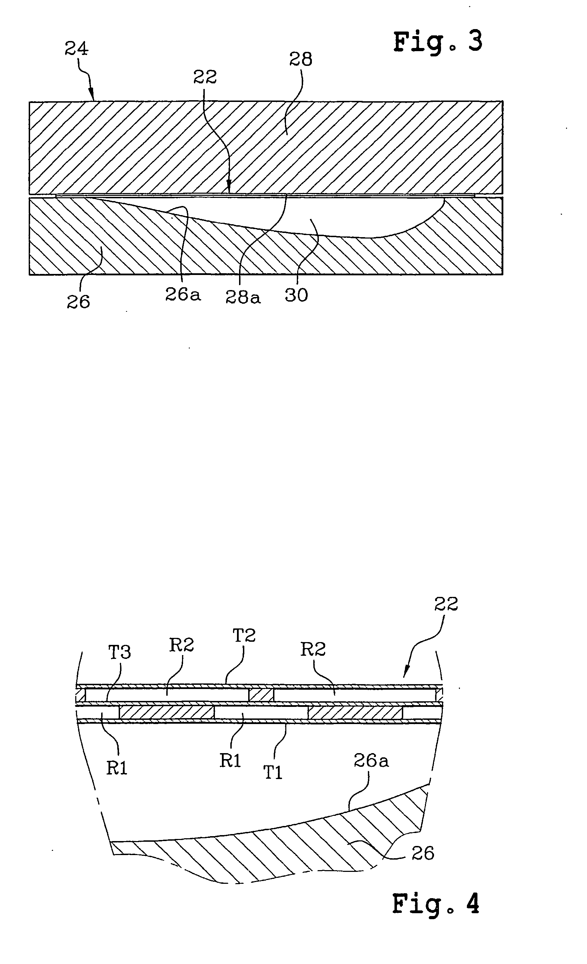

Comme l'illustrent plus précisément les figures 3 et 4, la fabrication de la sous structure 10 débute par la mise en place d'un empilement 22 de trois tôles T1, T2 et T3, initialement planes, dans un moule 24. Plus précisément, le moule 24 comprend une partie inférieure 26 et une partie supérieure 28 délimitant entre elles une cavité fermée 30 dans laquelle est placé l'empilement de tôles 22. La cavité 30 est délimitée, sur la partie inférieure 26, par une surface 26a complémentaire de la paroi extérieure 14 de la sous structure 10 à fabriquer et, sur la partie supérieure 28, par une surface plane 28a proche de l'empilement de tôles 22.

Comme l'illustre la figure 3, l'empilement de tôles 22 est placé dans le moule 24 de façon telle que les bords des tôles T1, T2 et T3 soient maintenus par des moyens de fixation appropriés (non représentés). Ainsi, les bords des tôles peuvent être maintenus entre les parties 26 et 28 du moule 24 par pincement.

Selon des procédures connues de l'homme du métier et qui ne seront donc pas exposées ici en détail, un anti-diffuseur est placé entre les tôles T1, T2 et T3, dans toutes les régions de celles-ci que l'on ne souhaite pas assembler lors du soudage par diffusion. Ces régions, identifiées par les références R1 et R2 sur la figure 4, correspondent aux régions destinées à former respectivement les cellules 20a et 20b de la sous structure 10 à fabriquer.

Plus précisément, les régions R1 sont situées entre la tôle intermédiaire T3 destinée à former les cloisons 18 et la tôle extérieure T1 tournée vers la surface 26a du moule et destinée à former la paroi extérieure 14. De façon comparable, les régions R2 sont situées entre la tôle intermédiaire T3 et la tôle intérieure T2 tournée vers la surface 28a du moule et destinée à former la paroi intérieure 16. En outre, les régions R1 ont une largeur égale à E1 et sont séparées les unes des autres par des bandes sensiblement de même largeur, destinées à être soudées. Les régions R2 sont situées en face de ces bandes destinées à être soudées, et elles ont une largeur très supérieure à E1, de façon à n'être séparées les unes des autres que par des bandes étroites destinées à être soudées.

Lorsque l'empilement de tôles 22 a été placé dans le moule 24 et que celui-ci a été fermé, une première étape du procédé selon l'invention consiste à chauffer ledit empilement à une température permettant la soudure par diffusion et la déformation plastique du métal. Lors de cette étape, l'empilement de tôles 22 est amené à une température d'environ 925°C.

Lorsque cette température est atteinte; un cycle de soudage des tôles T1, T2 et T3 par diffusion, en dehors des régions R1 et R2 à ne pas assembler, est exécuté. La mise en oeuvre de ce cycle s'effectue selon des procédures classiques bien connues de l'homme du métier, de sorte qu'il n'en sera pas fait ici de description précise.

L'étape suivante du procédé selon l'invention permet de former les cellules 20a et 20b de la sous structure 10 à réaliser et assure la mise en forme globale de celle-ci. A cet effet, la température de l'empilement est maintenue à environ 925°C.

Une caractéristique importante de cette étape est que deux pressions de formage indépendantes P1 et P2 sont appliquées simultanément sur les tôles de l'empilement 22. Plus précisément, la pression P1 est appliquée dans les régions R1 délimitées entre la tôle extérieure T1 et la tôle intermédiaire T3. La pression P2 est appliquée quant à elle dans les régions R2 délimitées entre la tôle intérieure T2 et la tôle intermédiaire T3, ainsi que sur la face de la tôle intérieure T2 tournée vers la surface 28a et, par conséquent, opposée à la surface 26a.

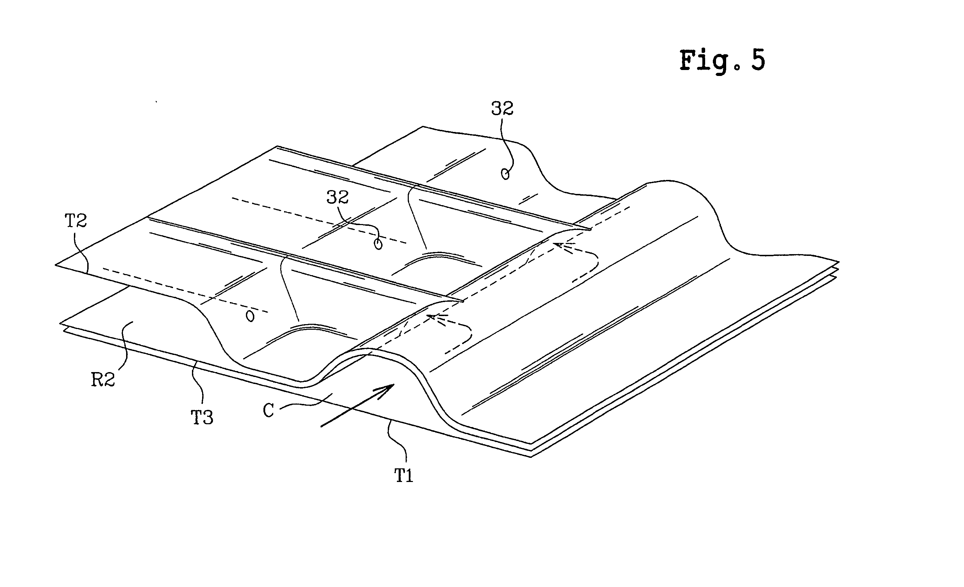

Afin d'assurer une alimentation indépendante de pression dans les régions R1 et R2, on voit sur la figure 5 (qui représente les tôles déformées après la mise en oeuvre du procédé) que chacune des régions R1 débouche, à l'une au moins de ses extrémités, dans un canal C d'alimentation ou de distribution. Ce canal C est formé en même temps que les régions R1 et R2 en interposant un anti-diffuseur à l'emplacement approprié entre les tôles T1 et T3. Il est alimenté en pression par au moins une canalisation (non représentée) prévue à cet effet dans le moule 24.

Par ailleurs, chacune des régions R2 communique avec l'extérieur de l'empilement de tôles 22, du côté de la surface 28a du moule 24, c'est-à-dire du côté opposé à la surface 26a du moule 24. Cette communication est assurée par des trous 32 qui traversent la tôle intérieure T2 aux extrémités de chacune des régions R2. Ainsi, la pression admise dans la partie de la cavité 30 du moule 24 située entre la tôle intérieure T2 et la surface 28a est automatiquement établie dans les régions R2 au travers de ces trous 32.

Grâce à l'agencement qui vient d'être décrit, lors d'une première phase du cycle de pression on applique dans les régions R1 une première pression P1 variable et on applique simultanément dans les régions R2 ainsi que dans la partie de la cavité 30 du moule 24 située entre la tôle intérieure T2 et la surface 28a une deuxième pression P2 sensiblement constante. Cette dernière pression P2 est significativement distincte et inférieure à P1.

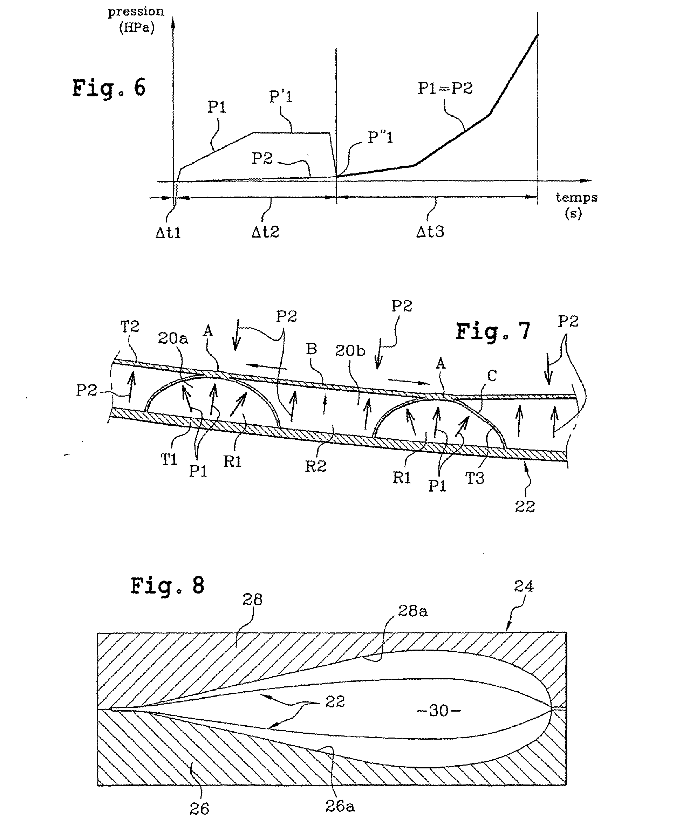

De façon plus précise et comme l'illustre la période de temps Δt2 sur la figure 6, la phase du procédé correspondant à la formation partielle des cellules 20a et à la mise en forme préalable de la sous structure 10 dure environ 60 minutes. Au cours de cette phase, la pression P2 dans les régions R2 et dans la partie de la cavité 30 du moule 24 située entre la tôle intérieure T2 et la surface 28a reste sensiblement constante et égale à environ 1,2 bar absolu.

Simultanément, la pression P1 dans les régions R1 augmente progressivement pour atteindre une valeur P1' après une période de temps sensiblement égale à la moitié de la durée de ladite phase (c'est-à-dire environ 30 minutes). Cette valeur P1' est sensiblement égale à quatre fois la valeur de P2. Pendant la deuxième moitié de la durée de cette phase, la pression P1 reste sensiblement constante et égale à P1'. A la fin de la phase de formation partielle des cellules, la pression P1 redescend très rapidement jusqu'à une valeur P1" sensiblement égale à P2.

L'injection d'une pression P1 relativement élevée dans les régions R1 et d'une pression P2 relativement faible dans les régions R2 et dans la partie de la cavité 30 du moule 24 située entre la tôle intérieure T2 et la surface 28a a pour premier effet d'ouvrir et de former partiellement les cellules 20a et 20b. La pression différentielle entre P1 et P2 a aussi pour effet de déplacer simultanément les tôles intérieure T2 et extérieure T1 vers la surface 26a de la cavité 30 du moule 24 et de les appliquer globalement contre ladite surface.

Au cours d'une dernière étape du procédé selon l'invention, qui correspond à la période de temps Δt3 sur la figure 6, les pressions P1 et P2 restent égales tout en augmentant régulièrement jusqu'à une valeur sensiblement égale à 9 bars. La durée de cette dernière étape est sensiblement égale à celle de la période de temps Δt2 correspondant à l'étape précédente de formation partielle des cellules 20a et 20b, c'est-à-dire environ 60 minutes.

Cette dernière étape du procédé selon l'invention assure la conformation finale du revêtement extérieur 14, en appliquant totalement celui-ci contre la surface 26a. Elle assure également la formation finale complète des cellules 20a et 20b. L'effet de cette dernière étape est illustré sur la figure 7, qui représente la forme de la structure à la fin de ladite étape.

La figure 7 illustre notamment l'action des pressions P1 et P2 sur les parois du panneau et le rôle joué par la surface 26a du moule 24 pour assurer la conformation de la paroi externe au contour du bord d'attaque. La figure 7 montre aussi la formation finale des cellules 20a et 20b.

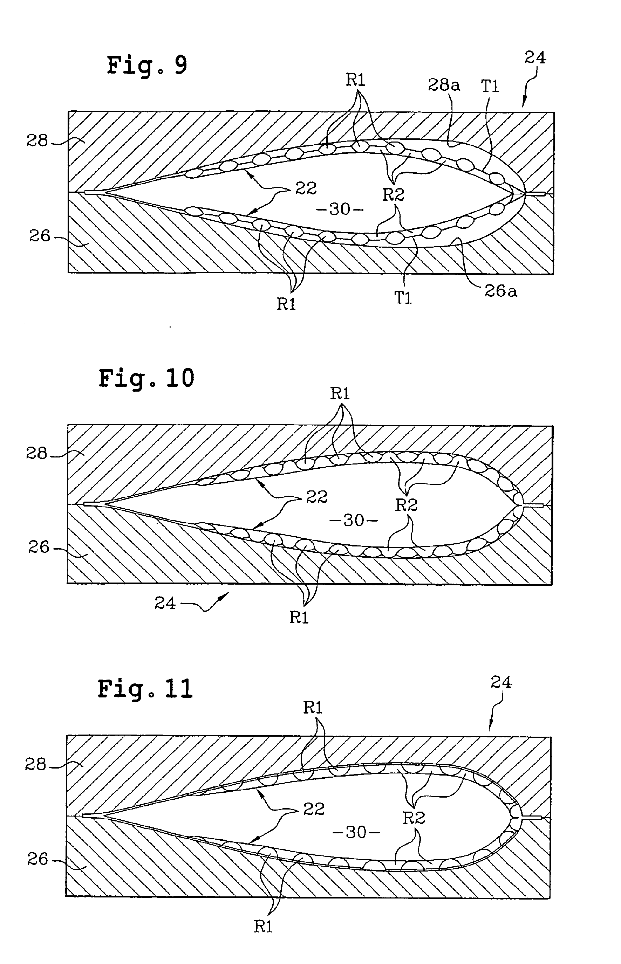

Durant la première phase du procédé (période Δt1 sur la figure 6), les parties A de la tôle intérieure T2 soudées à la tôle intermédiaire T3 s'éloignent de la tôle extérieure T1 qui est alors progressivement plaquée contre le moule (voir la figure 9). Le gonflement des régions R1 correspondant aux cellules 20a induit une élongation significative des parties C de la tôle intermédiaire T3, correspondant aux cloisons 18 de la sous structure 10 à fabriquer. Il en découle une mise sous tension des parties B de la tôle intérieure T2, situées entre les parties A. La mise sous tension de la tôle interne T2 provoque son déplacement vers l'intérieur, c'est-à-dire en éloignement de la tôle extérieure T1 (voir la figure 10), jusqu'à l'obtention de parties B planes entre les parties A successives (voir les figures 7 et 11).

Des résultats d'essai ont révélé que la réalisation optimisée d'une sous structure 10 de bord d'attaque par le procédé selon l'invention dépend des dimensions caractéristiques E1, E2 et E3 données aux cellules 20a et 20b. Ainsi, dans le cas d'une sous structure de bord d'attaque destinée à l'aspiration de la couche limite et, occasionnellement, au dégivrage par soufflage d'air chaud à travers la paroi externe 14 rendue poreuse, l'optimum dimensionnel est obtenu pour une épaisseur moyenne E3 de la paroi externe 14 uniformément égale à 0,9 mm et une largeur de cellule E1 sensiblement égale à 5 fois la hauteur E2 (voir la figure 2). Par exemple, si la hauteur E2 des cellules est de 5 mm, leur largeur E1 est de 25 mm.

Ces valeurs géométriques caractéristiques E1, E2 et E3 sont ajustées en adaptant les paramètres opératoires du procédé.

Ainsi, la valeur finale de la largeur de cellule E1 résulte de la définition initiale de cette largeur et de l'espacement relatif des bandes de soudure par diffusion (parties A sur la figure 7) dans l'empilement de tôles 22.

La valeur finale de la hauteur de cellule E2 est obtenue principalement en ajustant la valeur de la pression P1' appliquée dans les régions R1 durant la première phase du procédé, qui conditionne l'essentiel du gonflement des cellules.

Enfin, l'uniformité d'épaisseur E3 de la paroi externe 14 peut être obtenue en usinant chimiquement la tôle externe T1, sur sa face intérieure tournée vers la tôle intermédiaire T3, suivant les bandes que constituent les zones de soudure avec ladite tôle intermédiaire. En ces endroits, l'épaisseur locale de la tôle externe T1 est réduite d'une valeur égale à l'épaisseur (moindre) de la tôle intermédiaire T3.

Lorsque la sous structure est destinée à l'aspiration de la couche limite et/ou au dégivrage par soufflage d'air chaud, la paroi externe 14 peut être rendue uniformément poreuse, après son assemblage, par exemple au moyen d'une technique de micro perforation par faisceau laser. La structure obtenue est ensuite raccordée à un système de distribution pneumatique qui permet, à travers la paroi poreuse, soit l'aspiration d'une partie de l'écoulement externe aux fins de contrôle de la couche limite, soit le soufflage d'air chaud aux fins de prévention du givrage de la paroi externe.

Comme on l'a représenté schématiquement sur les figures 8 à 11, le procédé selon l'invention peut également être mis en oeuvre pour fabriquer simultanément deux sous structures 10. Dans ce cas, on utilise un moule 24 dont les deux parties 26 et 28 sont, par exemple, symétriques par rapport au plan de joint. En particulier, la cavité 30 du moule est alors délimitée, sur la partie inférieure 26, par une surface 26a complémentaire de la paroi extérieure 14 d'une première sous structure 10 à fabriquer et, sur la partie supérieure 28, par une surface 28a complémentaire de la paroi extérieure 14 de la deuxième sous structure 10 à fabriquer.

Dans ce cas, on place entre les deux parties 26 et 28 du moule 24 deux empilements 22 de trois tôles, de façon telle que les tôles extérieures T1 de chacun des empilements 22 soient situées à l'extérieur et tournées respectivement vers les surfaces 26a et 28a. Un film anti diffuseur est alors également placé entre les faces adjacentes des tôles internes T2.

Comme on l'a représenté sur la figure 8 et comme l'illustre également le graphique de la figure 6, la première phase du procédé correspondant à la formation partielle des cellules et à la mise en forme des sous structures est précédée par l'application d'un cycle préliminaire de pression, de très faible durée Δt1. Ce cycle préliminaire de pression a pour fonction de séparer les deux empilements (figure 8). Il se caractérise par l'application d'une pression identique, de faible niveau, à la fois dans les régions R1 et R2 et entre les faces adjacentes des tôles intérieures T2.

Dans la pratique, la durée Δt1 du cycle préliminaire de pression est, par exemple, d'environ une minute et la pression appliquée est d'environ 1,2 bar absolu.

Comme l'illustrent successivement les figures 9 et 10, la phase préliminaire du cycle de pression est suivie d'une étape de formation partielle des cellules et de mise en forme de la structure, au cours de laquelle une première phase du cycle de pression est exécutée. Lors de cette première phase, une première pression variable est appliquée dans les régions R1 et une pression faible et constante est appliquée dans les régions R2 ainsi qu'entre les deux empilements. Cette étape est identique à celle qui a été décrite précédemment dans le cas où une seule sous structure est fabriquée.

Il en est de même pour l'étape suivante de conformation finale des cellules et des revêtements extérieurs, au cours de laquelle une même pression est appliquée dans les régions R1 et R2 ainsi qu'entre les empilements.

Ainsi, le procédé selon l'invention permet de fabriquer en une seule fois une ou deux structures métalliques cellulaires présentant une surface extérieure lisse, par la technique SPFDB, d'une manière particulièrement simple et peu coûteuse.

Bien entendu, l'invention n'est pas limitée au mode de réalisation qui vient d'être décrit, mais en couvre toutes les variantes.

## Revendications

1. Procédé de fabrication d'au moins une structure métallique (10) comprenant une paroi extérieure lisse (14), une paroi intérieure (16) et des cloisons (18) reliant lesdites parois en délimitant entre elles des cellules (20a, 20b) adjacentes, ledit procédé comprenant les étapes successives suivantes :
- mise en place d'au moins un empilement (22) de trois tôles métalliques (T1, T2, T3) superposées dans un moule (24) comprenant une surface (26a) complémentaire de la paroi extérieure lisse (14) de la structure (10) à fabriquer, avec interposition d'un anti-diffuseur entre les tôles (T1, T2, T3) dans des régions (R1, R2) à ne pas assembler ;
- chauffage de l'empilement de tôles (22) et exécution d'un cycle de soudage des tôles par diffusion, en dehors desdites régions (R1, R2) à ne pas assembler ;
le procédé étant **caractérisé en ce que** l'étape de chauffage de l'empilement de tôles (22) est suivie des étapes successives suivantes: - formation partielle des cellules (20a, 20b) et mise en forme de la structure (10) par exécution d'une première phase d'un cycle de pression, consistant à appliquer une première pression dans des premières régions (R1) délimitées entre une première tôle (T1) adjacente à ladite surface (26a) du moule (24) et une tôle intermédiaire (T3) dudit empilement (22) et une deuxième pression sensiblement constante, indépendante de la première pression et inférieure à celle-ci, sur la face de la troisième tôle (T2) opposée à ladite surface (26a) et dans des deuxièmes régions (R2) délimitées entre la troisième tôle (T2) et la tôle intermédiaire (T3) ;
- conformation finale des cellules et de la paroi extérieure (14) par exécution d'une deuxième phase du cycle de pression consistant à appliquer simultanément une pression sensiblement égale à la fois dans les premières et deuxièmes régions (R1, R2) et sur ladite face de la troisième tôle (T2).

2. Procédé de fabrication selon la revendication 1, dans lequel la première pression appliquée dans les premières régions (R1) augmente progressivement jusqu'à une valeur prédéterminée pendant environ une première moitié de la durée de la première phase du cycle de pression, puis reste constante jusqu'à la fin de la première phase, où la première pression redescend très rapidement à une valeur égale à celle de la deuxième pression dans les deuxièmes régions (R2) et sur ladite face de la troisième tôle (T2).

3. Procédé de fabrication selon la revendication 2, dans lequel la valeur prédéterminée de la première pression appliquée dans les premières régions (R1) est sensiblement égale à quatre fois la deuxième pression appliquée dans les deuxièmes régions (R2) et sur ladite face de la troisième tôle (T2).

4. Procédé de fabrication selon l'une quelconque des revendications 2 et 3, dans lequel la durée totale du premier cycle de pression est d'environ 60 minutes.

5. Procédé de fabrication selon l'une quelconque des revendications 2 à 4, dans lequel la pression dans les deuxièmes régions (R2) et sur ladite face de la troisième tôle (T2) reste sensiblement constante et égale à environ un bar pendant la première phase du cycle de pression.

6. Procédé de fabrication selon l'une quelconque des revendications précédentes, dans lequel les pressions dans les premières et deuxièmes régions (R1, R2) et sur ladite face de la troisième tôle (T2) augmentent régulièrement pendant la deuxième phase du cycle de pression, jusqu'à l'obtention d'une pression finale déterminée.

7. Procédé de fabrication selon la revendication 6, dans lequel la pression finale est d'environ 9 bars.

8. Procédé de fabrication selon l'une quelconque des revendications précédentes, dans lequel la deuxième phase du cycle de pression a une durée sensiblement égale à celle de la première phase du cycle de pression.

9. Procédé de fabrication selon l'une quelconque des revendications précédentes, dans lequel on met en place simultanément dans le moule (24) deux empilements de tôles (22) et on sépare lesdits empilements lors d'une phase préliminaire du cycle de pression, pendant lequel une pression identique, de faible niveau, est appliquée durant une très courte période de temps à la fois dans les premières et deuxièmes régions (R1, R2) et sur ladite face de la troisième tôle (T2), la phase préliminaire du cycle de pression précédant la première phase du cycle de pression.

10. Procédé de fabrication selon la revendication 9, dans lequel la phase préliminaire du cycle de pression dure environ une minute et le niveau de la pression appliquée durant cette phase préliminaire est d'environ 1,2 bar absolu.

11. Procédé de fabrication selon l'une quelconque des revendications précédentes, dans lequel on applique la première pression par au moins un canal de distribution (C) dans lequel débouchent lesdites premières régions (R1).

12. Procédé de fabrication selon l'une quelconque des revendications précédentes, dans lequel la face de la première tôle (T1) tournée vers la tôle intermédiaire (T3) est usinée suivant des bandes prévues pour être soudées à cette dernière, sur une épaisseur égale à celle de la tôle intermédiaire (T3), avant la mise en place de l'empilement (22) dans le moule (24), afin que la paroi extérieure (14) de la structure (10) fabriquée présente une épaisseur sensiblement constante.

13. Procédé de fabrication selon l'une quelconque des revendications précédentes, dans lequel
on donne aux cellules (20a, 20b) une largeur sensiblement égale à 5 fois la hauteur desdites cellules.

## Claims

1. Process for manufacturing at least one metallic structure (10) comprising a smooth outer skin (14), an inner skin (16) and partitions (18) connecting the said skins by delimiting adjacent cells (20a, 20b) from each other, the said process comprising the following main successive steps:
- placement of at least one stack (22) of three metallic plates (T1, T2, T3) superposed in a mould (24) comprising a surface (26a) complementary to the smooth outer skin (14) of the structure (10) to be made, with the insertion of an anti-diffuser between the plates (T1, T2, T3) in regions (R1, R2) that are not to be assembled;
- heating of the stack of plates (22) and execution of a plate diffusion welding cycle, outside the said regions (R1, R2) that are not to be assembled;
the process being **characterized in that** the step of heating of the stack of plates (22) is followed by the following successive steps:
- partial formation of the cells (20a, 20b) and shaping of the structure (10) by making a first phase in a pressure cycle, consisting of applying a first pressure in the first regions (R1) delimited between a first plate (T1) adjacent to the said surface (26a) of the mould (24) and an intermediate plate (T3) in the said stack and a second approximately constant pressure independent of and lower than the first pressure, on the face of the third plate (T2) opposite the said surface (26a) and in the second regions (R2) delimited between the third plate (T2) and the intermediate plate (T3);
- final conformation of the cells and the outer skin (14) by carrying out a second phase in the pressure cycle consisting of simultaneously applying an approximately equal pressure in the first and second regions (R1, R2) and on the said face of the third plate (T2).

2. Manufacturing process according to claim 1, in which the first pressure applied in the first regions (R1) increases progressively up to a predetermined value during about a first half of the duration of the first phase of the pressure cycle, and then remains constant until the end of the said first phase, when the first pressure goes down very quickly to a value equal to the value of the second pressure applied in the second regions (R2) and on the said face of the third plate (T2).

3. Manufacturing process according to claim 2, in which the predetermined value of the first pressure applied in the first regions (R1) is approximately equal to four times the second pressure than applied in the second regions (R2) and on the said face of the third plate (T2).

4. Manufacturing process according to any one of claims 2 and 3, in which the total duration of the first pressure cycle is about 60 minutes.

5. Manufacturing process according to any one of claims 2 to 4, in which the pressure in the second regions (R2) and on the said face of the third plate (T2) remains approximately constant and equal to about one bar during the first phase of the pressure cycle.

6. Manufacturing process according to any one of the previous claims, in which the pressures in the first and second regions (R1, R2) and on the said face of the third plate (T2) increase regularly during the second phase of the pressure cycle until a final determined pressure is obtained.

7. Manufacturing process according to claim 6, in which the final pressure is about 9 bars.

8. Manufacturing process according to any one of the previous claims, in which the duration of the second phase of the pressure cycle is approximately equal to the duration of the first phase of the pressure cycle.

9. Manufacturing process according to any one of the previous claims, in which two stacks of plates (22) are placed simultaneously in the mould (24) and the said stacks are separated during a preliminary phase of the pressure cycle, during which a low and identical pressure is applied for a very short time in the first and second regions (R1, R2) and on the said face of the third plate (T2), the preliminary phase of the pressure cycle preceding the first phase of the pressure cycle.

10. Manufacturing process according to claim 9, in which the preliminary phase of the pressure cycle advantageously lasts for about one minute and the pressure applied during this preliminary phase is about 1.2 bars absolute.

11. Manufacturing process according to any one of the previous claims, in which the first pressure is applied through at least one distribution channel (C) towards which the first regions (R1) open up.

12. Manufacturing process according to any one of the previous claims, in which the face of the first plate (T1) facing the intermediate plate (T3) is machined along strips that will be welded to the intermediate plate, over a thickness equal to the thickness of the intermediate plate (T3), before the stack (22) is placed in the mould (24), such that the thickness of the outer skin (14) of the manufactured structure (10) is approximately constant.

13. Manufacturing process according to any one of the previous claims, in which the width of the cells (20a, 20b) is made approximately equal to five times the height of the said cells.

## Patentansprüche

1. Verfahren zur Herstellung mindestens einer Metallstruktur (10), die eine glatte äußere Wand (14), eine innere Wand (16) und Zwischenwände (18) aufweist, welche diese Wände verbinden und dabei zwischen sich nebeneinanderliegende Zellen (20a, 20b) abgrenzen, wobei das Verfahren die folgenden aufeinanderfolgenden Schritte beinhaltet:
- Errichten mindestens eines Stapels (22) von drei Metallblechen (T1, T2, T3), die in einem Formwerkzeug (24) übereinander angeordnet sind, das eine Fläche (26a) aufweist, die zur glatten äußeren Wand (14) der herzustellenden Struktur (10) komplementär ist, und zwar bei Dazwischenanordnen eines Anti-Diffussionsstückes zwischen den Blechen (T1, T2, T3) in den Gebieten (R1, R2), die nicht zusammengefügt werden sollen;
- Erhitzen des Stapels von Blechen (22) und Ausführen eines Zyklus eines Schweißens der Bleche mittels Diffusion, und zwar außerhalb der nicht zusammenzufügenden Gebiete (R1, R2);
wobei das Verfahren **dadurch gekennzeichnet ist, dass** der Schritt des Erhitzens des Stapels von Blechen (22) von den folgenden aufeinanderfolgenden Schritten gefolgt wird:
partielles Ausbilden der Zellen (20a, 20b), und In-Form-Bringen der Struktur (10) durch Ausführen einer ersten Phase eines Druckzyklus, die darin besteht, einen ersten Druck in ersten Gebieten (R1), die zwischen einem ersten Blech (T1), das an die Fläche (26a) des Formwerkzeug (24) angrenzt,
und einem Zwischenblech (T3) des Stapels (22) begrenzt sind, und einen zweiten im Wesentlichen konstante Druck aufzubringen, der vom ersten Druck unabhängig und geringer als dieser ist, und zwar auf diejenige Seite des dritten Blechs (T2), welche der Fläche (26a) entgegengesetzt ist, und in zweiten Gebieten (R2), die zwischen dem dritten Blech (T2) und dem Zwischenblech (T3) begrenzt sind;
- abschließende Formanpassung der Zellen und der äußeren Wand (14) durch Ausführen einer zweiten Phase des Druckzyklus, die darin besteht, gleichzeitig sowohl in den ersten und zweiten Gebieten (R1, R2) und auf die besagte Seite des dritten Blechs (T2) einen im Wesentlichen gleich großen Druck aufzubringen.

2. Herstellungsverfahren nach Anspruch 1, bei dem der erste Druck, der in den ersten Gebieten (R1) aufgebracht wird, progressiv bis zu einem ersten vorbestimmten Wert ansteigt, und zwar während ungefähr einer ersten Hälfte der Dauer der ersten Phase des Druckzyklus, und dann bis zum Ende der ersten Phase konstant bleibt, wo der erste Druck sehr schnell auf einen Wert abfällt, der so groß ist wie der zweite Druck, und zwar in den zweiten Gebieten (R2) und auf die besagte Seite des dritten Blechs (T2).

3. Herstellungsverfahren nach Anspruch 2, bei dem der vorbestimmte Wert des ersten Drucks, der in den ersten Gebieten (R1) aufgebracht wird, im Wesentlichen viermal so groß wie der zweite Druck ist, der in den zweiten Gebieten (R2) und auf die besagte Seite des dritten Blechs (T2) aufgebracht wird.

4. Herstellungsverfahren nach einem der Ansprüche 2 oder 3, bei dem die Gesamtdauer des ersten Druckzyklus ungefähr 60 Minuten beträgt.

5. Herstellungsverfahren nach einem der Anspräche 2 bis 4, bei dem der Druck in den zweiten Gebieten (R2) und auf die besagte Seite des dritten Blechs (T2) im Wesentlichen konstant bleibt und ungefähr 1 Bar beträgt, und zwar während der ersten Phase des Druckzyklus.

6. Herstellungsverfahren nach einem der vorhergehenden Ansprüche, bei dem die Drücke in den ersten und zweiten Gebieten (R1, R2) und auf die besagte Seite des dritten Blechs (T2) gleichmäßig während der zweiten Phase des Druckzyklus ansteigen, bis zum Erreichen eines festgelegten Enddrucks.

7. Herstellungsverfahren nach Anspruch 6, bei dem der Enddruck ungefähr 9 Bar beträgt.

8. Herstellungsverfahren nach einem der vorhergehenden Ansprüche, bei dem die zweite Phase des Druckzyklus eine Dauer hat, die im Wesentlichen so groß wie die der ersten Phase des Druckzyklus ist.

9. Herstellungsverfahren nach einem der vorhergehenden Ansprüche, bei dem in das Formwerkzeug (24) gleichzeitig zwei Stapel von Blechen (22) eingesetzt werden und die Stapel während einer vorbereitenden Phase des Druckzyklus getrennt werden, während dem ein identischer Druck geringer Größe während einer sehr kurzen Zeitdauer sowohl in den ersten und zweiten Gebieten (R1, R2) und auf die besagte Seite des dritten Blechs (T2) aufgebracht wird, wobei die vorbereitende Phase des Druckzyklus der ersten Phase des Druckzyklus vorausgeht.

10. Herstellungsverfahren nach Anspruch 9, bei dem die vorbereitende Phase des Druckzyklus ungefähr eine Minute andauert und die Höhe des Drucks, der während dieser vorbereitenden Phase aufgebracht wird, ungefähr 1,2 Bar absolut beträgt.

11. Herstellungsverfahren nach einem der vorhergehenden Ansprüche, bei dem der erste Druck durch mindestens einen Verteilungskanal (C) aufgebracht wird, in den die ersten Gebiete (R1) einmünden.

12. Herstellungsverfahren nach einem der vorhergehenden Ansprüche, bei dem die Seite des ersten Blechs (T1), welche zum Zwischenblech (T3) hin gewandt ist, entlang von Streifen materialabnehmend bearbeitet wird, welche zum Verschweißen mit Letzterem vorgesehen sind, und zwar um eine Dicke, die derjenigen des Zwischenblech (T3) entspricht, und vor dem Einlegen des Stapels (22) in das Formwerkzeug (24), damit die äußere Wand (14) der hergestellten Struktur (10) im Wesentlichen konstante Dicke aufweist.

13. Herstellungsverfahren nach einem der vorhergehenden Ansprüche, bei dem den Zellen (20a, 20b) eine Breite gegeben wird, die im Wesentlichen das 5-fache der Höhe dieser Zellen beträgt.
